# EUROPEAN PATENT APPLICATION

(11) **EP 4 009 156 A1**
(43) Date of publication of application: **08.06.2022**
(21) Application number: 21210454.1
(22) Date of filing: 25.11.2021
(51) Int. Cl.: G06F 3/12

(54) **INFORMATION PROCESSING APPARATUS AND METHOD FOR CONTROLLING INFORMATION PROCESSING APPARATUS**

(30) Priority: 03.12.2020 JP 2020201257
(71) Applicant: CANON KABUSHIKI KAISHA, OHTA-KU Tokyo 146-8501 (JP)
(72) Inventor: YASUDA, Akihiro, Tokyo, 146-8501 (JP)
(74) Representative: TBK

(57) **Abstract**

An information processing apparatus described in this specification includes an acquisition unit configured to acquire configuration information of a printing apparatus from a cloud print server system, a storage unit configured to store the acquired configuration information, a control unit configured to display a print setting screen on a display unit based on configuration information stored in the storage unit, a transmission unit configured to transmit an acquisition request of configuration information in a state in which configuration information is stored in the storage unit, and an update unit configured to update the configuration information stored in the storage unit, using configuration information acquired based on the transmitted acquisition request.

## Description

### BACKGROUND

### Field of the Disclosure

The present disclosure relates to an information processing apparatus, and a method for controlling information processing apparatus.

### Description of the Related Art

There has been known a system that transmits print data to a printer from a client terminal via a cloud server. In the above-described system, a user makes a print setting by operating a printer driver installed on the client terminal, and issues a print instruction. The printer driver installed on the client terminal transmits print data that is based on image data and the print setting, to the cloud server. By the cloud transmitting the received print data to the printer, printing can be performed.

Japanese Patent Application Laid-Open No. 2013-238924 discusses creating a virtual printer queue on a cloud server, and executing printing via the virtual printer queue.

When a cloud print server is used, a print queue for transmitting print data to the virtual printer queue on the cloud print server needs to be prepared in a client terminal. The client terminal acquires configuration information of a printer and information regarding the virtual printer queue on the cloud print server from the cloud print service, and generates a print queue for transmitting print data to the virtual printer queue on the cloud print server. The client terminal displays a print setting screen using the configuration information and capability information of the printer that have been acquired at the time of print queue generation.

The client terminal uses the configuration information acquired at the time of print queue generation. Thus, even if an actual configuration of the printer changes by a new finisher being connected to the printer, configuration information in the client terminal is not updated, and a print setting screen for using the newly-connected finisher cannot be displayed.

### SUMMARY

According to one or more embodiments, an information processing apparatus described in this application is directed to enabling configuration information stored in a client terminal, to be updated in a case where configuration information of a printer registered in a cloud print server changes.

According to a first aspect of the present invention, there is provided an information processing apparatus as specified in claims 1 to 7. According to a second aspect of the present invention, there is provided an application as specified in claims 8 to 12. According to a third aspect of the present invention, there is provided a control method as specified in claims 13 to 17.

Further features of the present disclosure will become apparent from the following description of exemplary embodiments with reference to the attached drawings.

### BRIEF DESCRIPTION OF THE DRAWINGS

Fig. 1 is a diagram illustrating an example of a system configuration according to an exemplary embodiment.
Fig. 2 is a diagram illustrating an example of a configuration of a client computer according to an exemplary embodiment.
Fig. 3 is a diagram illustrating an example of a software configuration of a cloud print service according to an exemplary embodiment.
Fig. 4 is a diagram illustrating an example of a software configuration of a print setting expansion application according to an exemplary embodiment.
Fig. 5 is a diagram illustrating an example of a hardware configuration of a cloud print supporting printer according to an exemplary embodiment.
Fig. 6 is a diagram illustrating an example of a sequence of registering the cloud print supporting printer into the cloud print service according to an exemplary embodiment.
Fig. 7 is a diagram illustrating an example of a sequence of updating configuration information stored in a client computer according to a first exemplary embodiment.
Fig. 8A is a diagram illustrating an example of a table indicating information regarding a printer queue registered in the cloud print service according to an exemplary embodiment.
Fig. 8B is a diagram illustrating an example of a table indicating information regarding a printer queue after configuration information has been updated according to an exemplary embodiment.
Fig. 9 is a diagram illustrating an example of a print setting screen to be displayed on the client computer according to an exemplary embodiment.
Fig. 10A is a diagram illustrating an example of an expanded print setting screen to be displayed on the client computer according to an exemplary embodiment.
Fig. 10B is a diagram illustrating an example of a message for configuration information update that is to be displayed on the client computer according to an exemplary embodiment.
Fig. 10C is a diagram illustrating an example of an expanded print setting screen to be displayed on the client computer after the update of configuration information according to an exemplary embodiment.
Fig. 11 is a flowchart illustrating an example of processing to be executed by the client computer according to the first exemplary embodiment.
Fig. 12 is a diagram illustrating an example of a sequence of processing for updating configuration information stored in the client computer according to a second exemplary embodiment.
Fig. 13 is a diagram illustrating an example of a sequence of processing for updating configuration information stored in the client computer according to a third exemplary embodiment.
Fig. 14A is a diagram illustrating an example of information regarding a printer queue managed by the cloud print service according to the first exemplary embodiment.
Fig. 14B is a diagram illustrating an example of information regarding an updated printer queue according to the first exemplary embodiment.

### DESCRIPTION OF THE EMBODIMENTS

Hereinafter, exemplary embodiments of the present disclosure will be described.

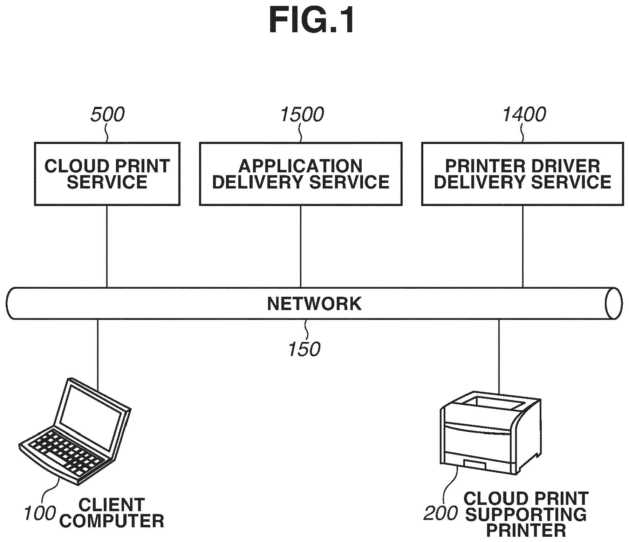

Fig. 1 is a diagram illustrating an example of a system configuration according to an exemplary embodiment of the present disclosure.

A client computer 100, a cloud print service 500, and a cloud print supporting printer 200 are connected to a network 150. The client computer 100 and the cloud print supporting printer 200 may be connected to different intranets. Even if the client computer 100 and the cloud print supporting printer 200 are connected to different intranets, the client computer 100 and the cloud print supporting printer 200 can exchange print data via the cloud print service 500.

The cloud print supporting printer 200 is a printing apparatus supporting a predetermined protocol supported by the cloud print service 500. For example, the predetermined protocol is a protocol such as an internet printing protocol (IPP). Hereinafter, the cloud print supporting printer 200 will be described as a printer 200.

The cloud print service 500 is a cloud print service constructed by a server system including one or a plurality of information processing apparatuses.

The cloud print service 500 performs account management using a user ID and a password. The client computer 100 or the printer 200 transmits the above-described user ID and password, and an authentication request to the cloud print service 500. By performing authentication processing based on the received information, the cloud print service 500 enables the client computer 100 or the printer 200 to use the cloud print service 500.

The number of client computers 100 and the number of printers 200 illustrated in Fig. 1 are both one, but a plurality of client computers 100 and a plurality of printers 200 may be connected to the network 150.

A printer driver delivery service 1400 is a server system that includes one or a plurality of information processing apparatuses, and delivers a printer driver and information for expanding a print queue, to the client computer 100.

An application delivery service 1500 is a server system that includes one or a plurality of information processing apparatuses, and delivers an application to the client computer 100. In the present exemplary embodiment, the application delivery service 1500 is a server system that delivers a print setting expansion application 300.

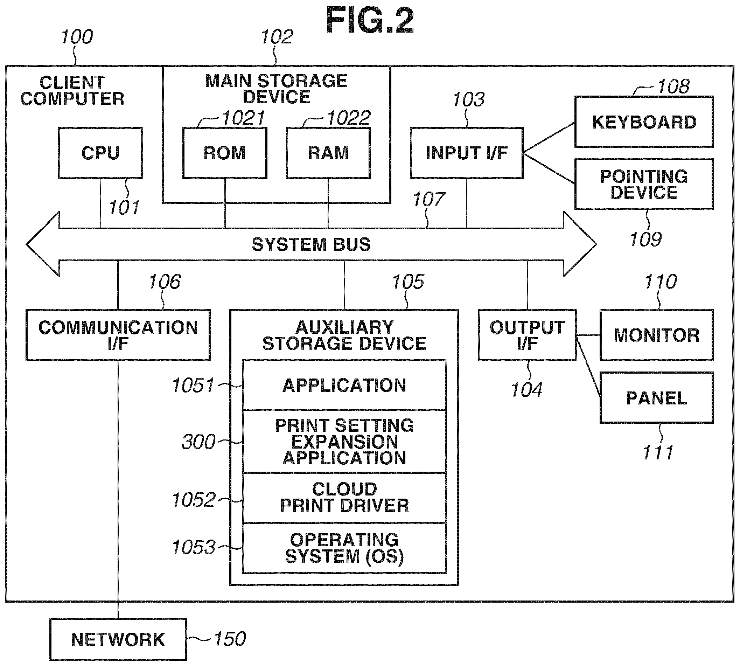

Fig. 2 is a hardware configuration diagram of a general computer (information processing apparatus) according to an exemplary embodiment of the present disclosure. Needless to say, unless otherwise stated, embodiments of the present disclosure can be applied to a single function, a system including a plurality of devices, and a system performing processing via network connection, as long as the function of the present disclosure is executed. The detailed description will be given below.

A central processing unit (CPU) 101 controls the entire apparatus in accordance with a program stored in a read-only memory (ROM) 1021 or a random access memory (RAM) 1022 of a main storage device 102, or an auxiliary storage device 105.

The RAM 1022 is used as a work area when the CPU 101 performs various types of processing.

The auxiliary storage device 105 stores an operating system (OS) 1053, an application 1051, the print setting expansion application 300, and a cloud print driver 1052.

The application 1051 is an application different from the print setting expansion application 300 being an application associated with a driver, and is a general application that can edit a document and create a presentation material. The user can issue a print instruction by operating a screen displayed by the application 1051.

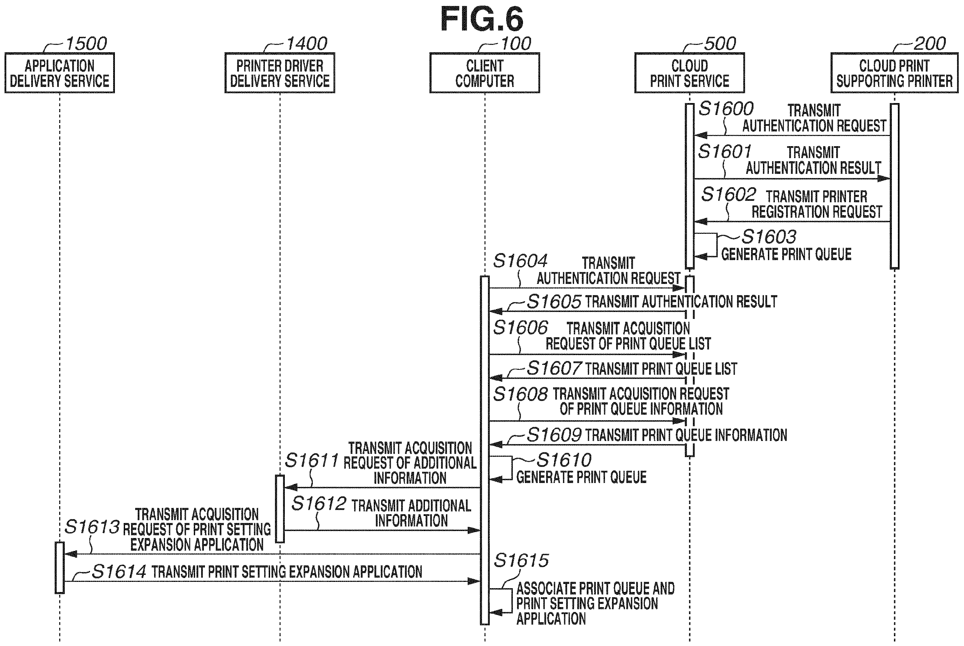

The cloud print driver 1052 is a printer driver supporting the cloud print service 500 and originally installed on the OS 1053. The cloud print driver 1052 is invoked from an application such as the application 1051 via the OS 1053, and executes processing for printing. In the present exemplary embodiment, the description will be given assuming that the cloud print driver 1052 is originally stored in the auxiliary storage device 105. The client computer 100 may download the cloud print driver 1052 from another server system such as the cloud print service 500. Alternatively, after the client computer 100 receives information regarding a print queue in step S1609 of Fig. 6, the OS 1053 of the client computer 100 may acquire the cloud print driver 1052 from another server system. In this case, in step S1610, the OS 1053 of the client computer 100 generates a print queue by associating the information regarding a print queue that has been received in step S1609, and the cloud print driver 1052 acquired from another server system.

The print setting expansion application 300 is application software operating in cooperation with the above-described cloud print driver 1052 for making an advanced print setting specific to a printer expected to execute printing. A method of downloading the print setting expansion application 300 will be described below.

In the following description, the main storage device 102 and the auxiliary storage device 105 will be collectively described as storage devices.

Input devices such as a pointing device 109 represented by a mouse and a touch panel, and a keyboard 108 are connected via an input interface (I/F) 103, and are devices for the user issuing various instructions to a computer.

An output I/F 104 is an interface for outputting data to the outside, and outputs data to output devices such as a monitor 110 and a panel 111.

The client computer 100 is connected to the network 150 via a communication I/F 106. A system bus 107 is a path for exchanging data between modules.

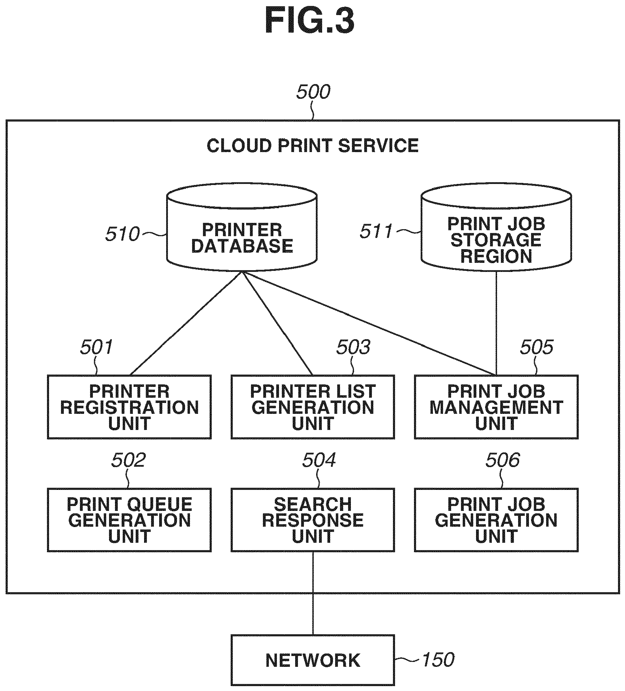

Fig. 3 is a functional block diagram of the cloud print service 500 according to an exemplary embodiment of the present disclosure. The cloud print service 500 operates as a cloud print server system including one or a plurality of information processing apparatuses. In the cloud print service 500, a CPU of one or a plurality of information processing apparatuses implements each function to be described below.

The cloud print service 500 is a service existing on a cloud operating on the Internet (the network 150), and enables printing-related functions to be provided. In the present exemplary embodiment, the cloud print service 500 has functions of a printer registration unit 501, a print queue generation unit 502, a printer list generation unit 503, a search response unit 504, and a printer database 510. Furthermore, the cloud print service 500 has functions of a print job management unit 505, a print job generation unit 506, and a print job storage region 511. These functions may be provided on another cloud print service cooperating with the cloud print service 500.

The printer registration unit 501 is a module for registering information regarding a printer into the cloud print service 500 upon receiving a registration instruction of the printer from the printer 200. The printer registration unit 501 receives a registration request from the printer 200, and generates a print queue using the print queue generation unit 502. The printer registration unit 501 registers the generated print queue into the printer database 510 in association with printer identification information. A state in which a print queue of a printer and printer identification information are registered in association with each other in this manner will be referred to as a state in which the printer is registered. In some cases, various attributes are added to the registered printer. For example, the added attributes correspond to a location of the printer and account information indicating a user who can access the registered printer.

The print queue generation unit 502 generates a print queue for managing print data to be processed by the printer 200, in accordance with a request from the printer registration unit 501.

The printer list generation unit 503 generates a list of registered printers.

The search response unit 504 transmits information regarding a registered printer in response to a printer search event transmitted from the client computer 100 to the cloud print service 500.

The print job storage region 511 is a region storing print data received from the client computer 100, as a print job.

The print job management unit 505 manages print jobs stored in the print job storage region 511, for each print queue, and transmits a print job to a printer corresponding to a print queue. Alternatively, the print job management unit 505 receives an acquisition request of a print job from the printer 200, and transmits a print job reserved in a print queue corresponding to the printer 200, to the printer 200.

The print job generation unit 506 generates a print job by processing print data received from the client computer 100, as necessary.

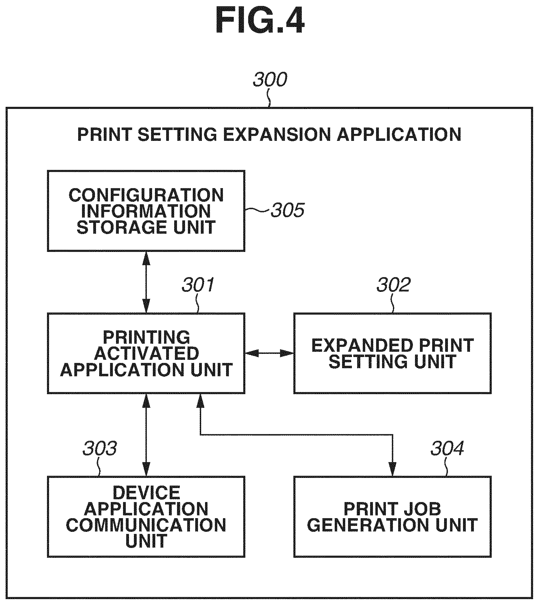

Fig. 4 is a block diagram illustrating a software configuration of the print setting expansion application 300. The print setting expansion application 300 is an application for a printer vendor expanding the function of the cloud print driver 1052.

The print setting expansion application 300 includes a printing activated application unit 301, an expanded print setting unit 302, a device application communication unit 303, and a print job generation unit 304.

The printing activated application unit 301 is a module to be invoked from the OS 1053 via the cloud print driver 1052 at the time of printing. The printing activated application unit 301 controls the entire print setting expansion application 300.

The expanded print setting unit 302 is a module for displaying an expanded print setting screen to be described below. The expanded print setting unit 302 receives a print setting from the cloud print driver 1052, and displays the expanded print setting screen based on the received print setting and configuration information stored in a configuration information storage unit 305.

The device application communication unit 303 has a function for each module of the print setting expansion application 300 communicating with the cloud print service 500 via the network 150.

The print job generation unit 304 provides a function of editing print data as necessary, and editing print data generated by the cloud print driver 1052. By the print job generation unit 304 editing print data, a vendor-specific print setting that cannot be set by the cloud print driver 1052 can be written into the print data.

The configuration information storage unit 305 is a module for managing configuration information of the printer 200 corresponding to a print queue of the client computer 100.

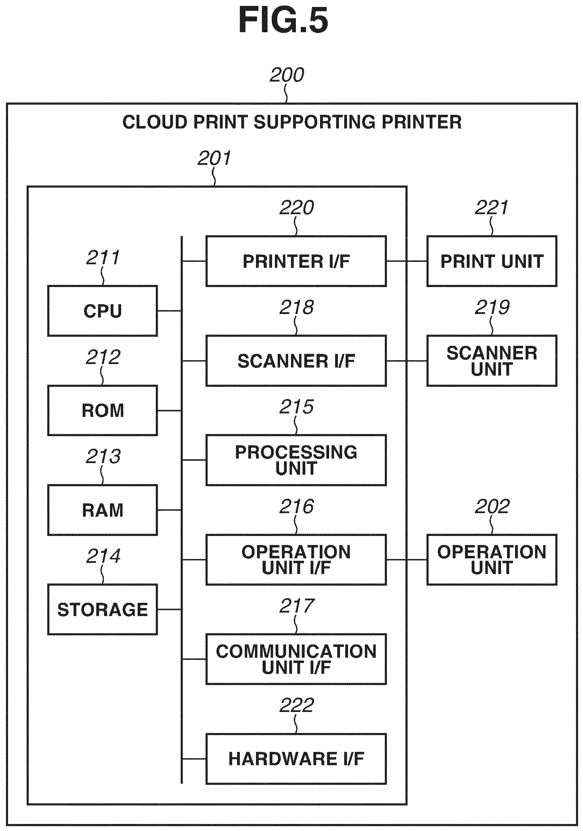

Fig. 5 is a diagram illustrating a functional block of a printer serving as an example of an image processing apparatus according to an exemplary embodiment of the present disclosure.

A control unit 201 including a CPU 211 controls operations of the entire printer 200. The CPU 211 performs various types of control such as printing control and reading control by reading out control programs stored in a ROM 212 or a storage 214.

The ROM 212 stores control programs executable by the CPU 211. A RAM 213 is a main storage memory of the CPU 211, and is used as a work area or a temporary storage region onto which various control programs are to be loaded.

The storage 214 stores print data, image data, various programs, and various types of setting information, and configuration information generated based on the various types of setting information. In a case where new hardware such as a finisher is added to a printer main body, the CPU 211 updates various types of setting information in the storage 214, and newly generates configuration information based on the updated setting information. The generated configuration information is transmitted to an associated service or a client computer via a communication unit I/F 217. In the present exemplary embodiment, an auxiliary storage device such as a hard disk drive (HDD) is assumed as the storage 214, but a nonvolatile memory such as a solid state drive (SSD) may be used in place of an HDD. In this manner, hardware components such as the CPU 211, the ROM 212, and the RAM 213 are included in a so-called computer.

A processing unit 215 has a function of a raster image processor (RIP) that generates a print image by rasterizing print data received via a network. The processing unit 215 also has a function of an image processing unit, and can also perform resolution conversion and correction processing of an image. In the present exemplary embodiment, an image processing unit is assumed to be implemented by a hardware circuit (application specific integrated circuit (ASIC), Field Programmable Gate Array (FPGA), etc.), but the image processing unit is not limited to this. For example, image processing and rasterizing processing of print data may be implemented by the printer 200 including a processor intended for image processing, and the processor intended for image processing executing an image processing program. Furthermore, image processing and rasterizing processing of print data can be performed by the CPU 211 executing a program for performing image processing. In addition, image processing may be performed by any combining of these.

An operation unit I/F 216 connects an operation unit 202 and the control unit 201. The operation unit 202 includes a liquid crystal display unit having a touch panel function, and various hardware keys. The operation unit 202 functions as a display unit that displays information, a reception unit that receives an instruction from the user, and a reading unit that generates a read image by reading a document. The generated read image is stored in the storage 214 or the RAM 213. A print image generated by the processing unit 215 by analyzing print data is transferred to a printing unit (not illustrated) in the operation unit 202 from the control unit 201 via the operation unit I/F 216. The printing unit receives a control command and the print image via the control unit 201, and prints an image onto a sheet fed from a sheet feeding cassette (not illustrated), based on the print image.

The control unit 201 is connected to the network 150 via the communication unit I/F 217.

The communication unit I/F 217 transmits an image and information to a communication device on the network 150, and receives print data and information from a communication device on the network 150.

A scanner unit 219 that generates image data by reading a document is connected to a scanner I/F 218. The printer 200 can execute printing that is based on image data generated by the scanner unit 219, and transmit the image data to another apparatus.

A printer I/F 220 is connected to a print unit 221 that prints an image. The print unit 221 executes printing that is based on image data generated by the scanner unit 219, and printing that is based on print data received from the cloud print service 500.

A hardware I/F 222 is an interface to which hardware such as a finisher is connected. Examples of the finisher include finishers having a function of stapling sheets on which images are formed, a function of punching sheets on which images are formed, a function of bookbinding sheets, and a function of folding sheets.

If a finisher is connected to the printer 200, configuration information of the printer 200 changes. Thus, the printer 200 updates configuration information managed by the cloud print service 500. Furthermore, in the present exemplary embodiment, the print setting expansion application 300 installed on the client computer 100 acquires configuration information from the cloud print service 500, and updates the configuration information.

Fig. 6 is a sequence diagram illustrating processing of generating a print queue for transmitting print data to the cloud print service 500, on the client computer 100.

First of all, the printer 200 is to be registered into the cloud print service 500. In step S1600, the printer 200 transmits an authentication request to the cloud print service 500 in accordance with an operation of the user. The authentication request includes a user ID and a password. In step S1601, the cloud print service 500 performs user authentication based on the received authentication request and information regarding the user ID and the password, and transmits an authentication result to the printer 200. In this example, the description will be given assuming that the authentication has succeeded. In a case where the authentication has failed, a sequence illustrated in Fig. 6 ends.

In step S1602, the printer 200 transmits a registration request of a printer to the cloud print service 500. The registration request includes identification information and configuration information of the printer 200. The configuration information transmitted in this step is configuration information acquired at the time point in step S1602.

In step S1603, the cloud print service 500 generates a print queue based on the acquired information. As necessary, the user sets information regarding a user who can use the generated print queue. In the above-described manner, registration processing of a printer into the cloud print service 500 ends.

Next, the user operates the client computer 100, and makes a setting for transmitting print data to the cloud print service 500. First of all, in step S1604, an authentication request is transmitted from the client computer 100 to the cloud print service 500. The authentication request includes a user ID and a password. The cloud print service 500 executes user authentication processing based on the received information regarding the user ID and the password. In step S1605, the cloud print service 500 transmits an authentication result to the client computer 100. In this example, the description will be given assuming that the authentication has succeeded.

In step S1606, the client computer 100 transmits an acquisition request of a list of print queues that can be used by a login user, to the cloud print service 500. In step S1607, the cloud print service 500 transmits a list of print queues that can be used by the user being in a login state, to the client computer 100. In step S1607, the cloud print service 500 transmits a list of names of print queues that can be used by the user, to the client computer 100, for example.

The client computer 100 displays the received list of print queues, and receives the selection of a print queue to be used, from the user. In step S1608, the client computer 100 transmits an information acquisition request of the selected print queue to the cloud print service 500. In step S1609, the cloud print service 500 transmits information regarding the selected print queue to the client computer 100. The information transmitted in this step includes identification information and configuration information of a printer associated with the print queue.

In step S1610, the client computer 100 generates a print queue on the client computer 100 based on the received information regarding the print queue. Then, the client computer 100 stores the generated print queue and the acquired identification information and configuration information of the printer in association with each other.

In step S1611, the client computer 100 accesses the printer driver delivery service 1400, and transmits an acquisition request of additional information for expanding a print queue, to the printer driver delivery service 1400. In step S1611, the client computer 100 transmits the identification information of the printer that has been acquired from the cloud print service 500, to the printer driver delivery service 1400.

In step S1612, the printer driver delivery service 1400 identifies additional information corresponding to the received identification information of the printer, and transmits the additional information to the client computer 100. The additional information includes identification information of the print setting expansion application 300.

In step S1613, the client computer 100 transmits an acquisition request of the print setting expansion application 300 to the application delivery service 1500 using the identification information of the print setting expansion application 300 that is included in the acquired additional information. In step S1614, the application delivery service 1500 transmits the print setting expansion application 300 identified based on the acquired application identification information, to the client computer 100. In step S1615, the client computer 100 stores the acquired print setting expansion application 300 in association with the print queue. The above-described sequence is a sequence for generating a print queue for transmitting print data to the cloud print service 500, on the client computer 100.

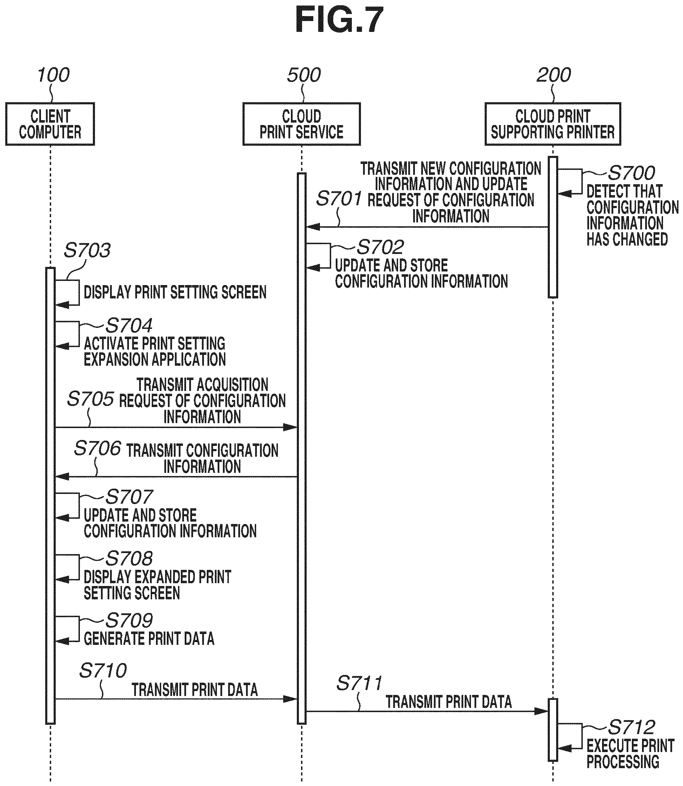

Next, processing up to the update of configuration information of the printer 200 and printing execution will be described with reference to a sequence diagram in Fig. 7. It is assumed that the processing illustrated in Fig. 6 has been completed.

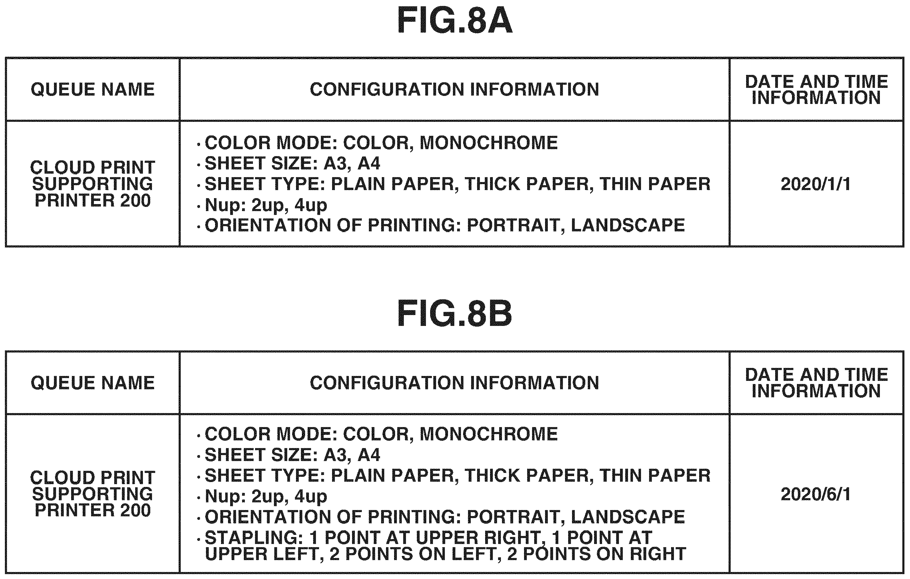

Fig. 8A illustrates configuration information of the printer 200 before a finisher is connected to the printer 200. The configuration information is stored in the printer database 510 of the cloud print service 500. In the printer 200, color printing and monochrome printing can be selected as color modes. The printer 200 supports A3 and A4 as sheet sizes. The printer 200 supports plain paper, thick paper, and thin paper sheet types. The printer 200 supports 2up for aggregating two pages and 4up for aggregating four pages as Nup functions of collectively printing a plurality of pages onto one side of a sheet. In addition, the printer 200 supports portrait and landscape as the orientations of sheets in printing. Date and time information indicates date and time on which the configuration information is registered in the cloud print service 500.

It is assumed that a finisher having a stapling function is connected to the printer 200. The printer 200 includes a sensor in the hardware I/F 222, and in step S700, the sensor detects the connection of the finisher, and detects that configuration information has changed. The change in configuration information may be detected using another method. For example, current configuration information may be stored into a memory, and it may be determined whether configuration information has changed, by comparing the configuration information stored in the memory at the time of activation of the printer 200, and configuration information acquired after the activation. Alternatively, it may be determined whether configuration information has changed, by periodically acquiring configuration information.

If the printer 200 detects that configuration information has changed, in step S701, the printer 200 transmits new configuration information and an update request of the configuration information to the cloud print service 500. At this time, the printer 200 issues a notification to the cloud print service 500 in accordance with the IPP. For example, in a case where a stapling configuration is added, the processing unit 215 of the printer 200 sets "Staple" as a value of "finishing-supported" being an attribute defined by the IPP. After that, the processing unit 215 notifies the cloud print service 500 of new configuration information via the communication unit I/F 217. In step S701 of Fig. 7, the cloud print service 500 may be notified of the entire updated configuration information, or the cloud print service 500 may be notified only of a difference made by a change in configuration. In a case where the cloud print service 500 is notified only of a difference, processing of adding newly-acquired configuration information to configuration information already stored in the cloud print service 500 is performed.

In the present exemplary embodiment, the cloud print service 500 and the printer 200 perform data exchange in accordance with the IPP, but may execute the processing illustrated in Fig. 7, in accordance with another protocol.

In step S702, the cloud print service 500 receives the update request of configuration information, identifies a print queue corresponding to a printer of which configuration information is to be updated, from the printer registration unit 501, and updates the configuration information. The configuration information illustrated in Fig. 8B is thereby registered into the cloud print service 500. A configuration of stapling is added to the configuration information illustrated in Fig. 8A.

The above-described sequence is a sequence of updating configuration information stored in the cloud print service 500. The description has been given assuming that the printer 200 detects that configuration information has changed, and transmits an update request of the configuration information to the cloud print service 500. The cloud print service 500 may periodically inquire of the printer 200 about configuration information, and update configuration information when the configuration information is different from stored configuration information.

Next, update of configuration information stored in the client computer 100 will be described.

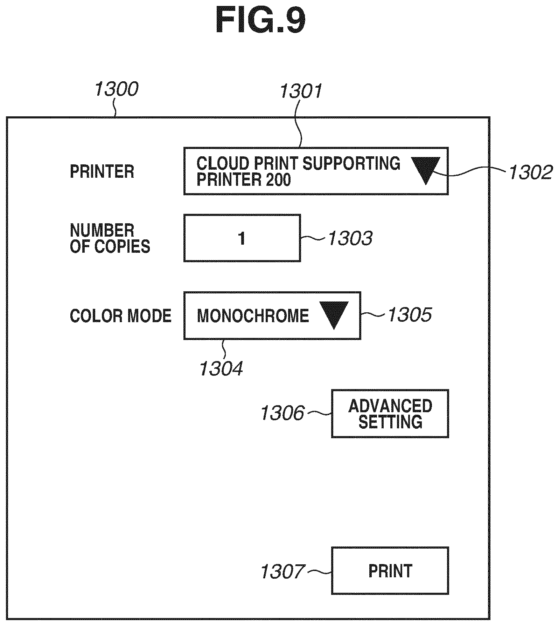

The user issues a display instruction of a print setting screen by operating the application 1051. The client computer 100 receives the instruction, and displays a print setting screen 1300 illustrated in Fig. 9. The print setting screen 1300 is a print setting screen to be displayed by the application 1051. A region 1301 is a region for selecting a print queue to be used in printing. The user selects a print queue to be used in printing, from a list of print queues registered in the client computer 100 that is displayed by selecting a button 1302. In this example, the print queue generated in the sequence illustrated in Fig. 6 is assumed to be selected.

The application 1051 displays a print setting screen based on the configuration information acquired in step S1609 of Fig. 6. A region 1303 is a region for setting the number of copies to be printed. A region 1304 is a region for selecting a color mode of printing. If the user selects a button 1305, selectable color modes are displayed based on the configuration information acquired in step S1609 of Fig. 6.

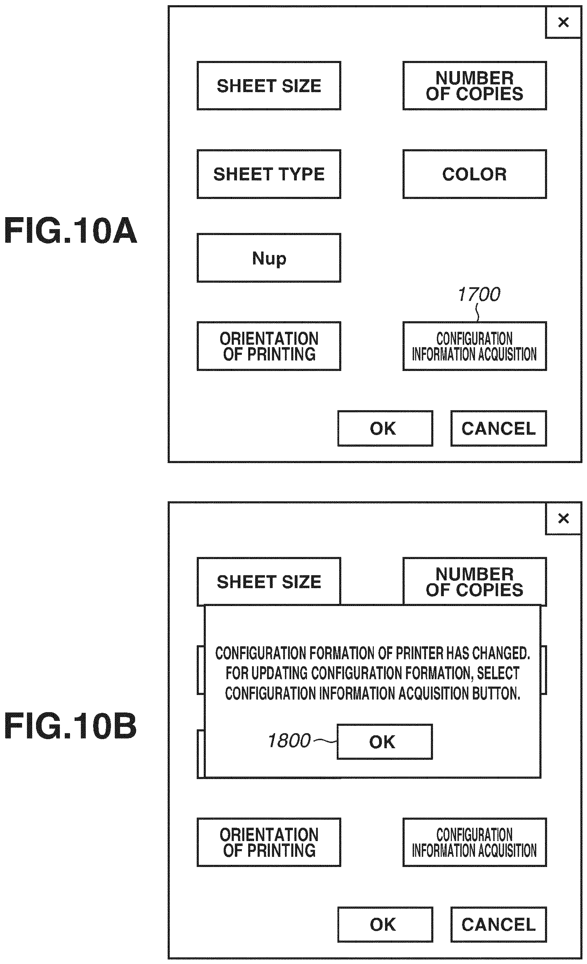

In this example, it is assumed that the user has selected an advanced setting button 1306. In step S704, the client computer 100 activates the print setting expansion application 300 based on the advanced setting button 1306 being selected. Fig. 10A illustrates an example of an expanded print setting screen to be displayed when the print setting expansion application 300 is activated. The screen is a screen to be displayed based on configuration information stored in the client computer 100 before configuration information is updated. In Fig. 10A, each setting item is displayed as a button, and the user can make a print setting by selecting a button to be set. In this manner, the advanced setting button 1306 illustrated in Fig. 9 operates as an object for receiving a display instruction of an expanded print setting screen from the user.

In step S705, the print setting expansion application 300 installed on the client computer 100 transmits an acquisition request of configuration information to the cloud print service 500. In this manner, in a state in which the client computer 100 stores configuration information, the client computer 100 transmits an acquisition request of new configuration information to the cloud print service 500. In step S706, the cloud print service 500 transmits information indicating that configuration information is stored, and configuration information stored in the printer database 510, to the client computer 100. In a case where the cloud print service 500 does not store configuration information, the print queue generation unit 502 may generate configuration information from information regarding a print queue, and notify the client computer 100 of the configuration information.

The client computer 100 receives the configuration information from the cloud print service 500, and determines whether the received configuration information is different from configuration information stored in the client computer 100. In a case where there is a difference, the client computer 100 displays a notification and inquires of the user whether to update the configuration information. The "notification" refers to a push notification service in Windows (registered trademark). A related application can be activated by a user operation on a displayed dialog. Fig. 10B is a diagram illustrating an example of a notification to be displayed in the present exemplary embodiment. A message indicating that configuration information of a printer has been changed, and a message indicating that a configuration information acquisition button is to be selected for updating configuration information are displayed. If the user selects an OK button 1800 in a notification region, the screen returns to the screen illustrated in Fig. 10A.

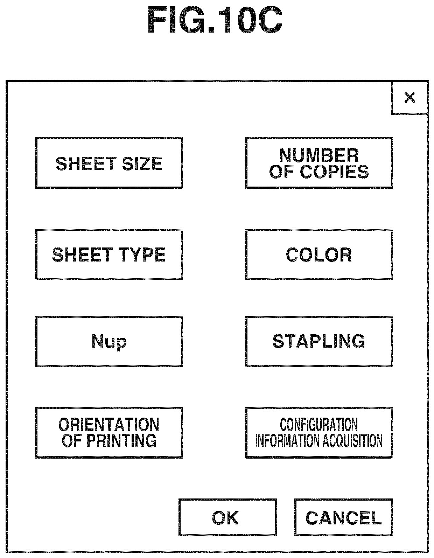

If the user selects a configuration information acquisition button 1700 on the screen illustrated in Fig. 10A, in step S707, the configuration information stored in the client computer 100 is updated as illustrated in Fig. 8B. Then, in step S708, the print setting expansion application 300 displays an expanded print setting screen illustrated in Fig. 10C. A button for setting stapling being a function provided by a newly-added finisher is added to the screen illustrated in Fig. 10C. In step S708, the print setting expansion application 300 determines an item to be displayed, based on configuration information stored in the client computer 100. For example, in a case where the configuration information stored in the client computer 100 is the configuration information illustrated in Fig. 8B, the print setting expansion application 300 determines a color mode, a sheet size, a sheet type, aggregated printing (Nup), the orientation of printing, and stapling as settable items. The print setting expansion application 300 generates an expanded print setting screen on which the determined items are arranged, and displays the expanded print setting screen on the client computer 100.

The user makes a print setting on the displayed expanded print setting screen, and selects an OK button. As a result, the print setting screen illustrated in Fig. 9 is displayed. If the user selects a print button 1307, in step S709, the cloud print driver 1052 of the client computer 100 generates print data. After that, in step S710, the cloud print driver 1052 transmits the generated print data to the cloud print service 500. In step S711, the cloud print service 500 transmits the received print data to the printer 200 corresponding to a print queue. In step S712, the printer 200 executes print processing based on the received print data.

In this manner, in the first exemplary embodiment, using the print setting expansion application 300, configuration information is acquired from the cloud print service 500, and configuration information stored in the client computer 100 is updated. With this configuration, a change in configuration information of the printer 200 can be reflected in the print setting screen and the expanded print setting screen displayed on the client computer 100.

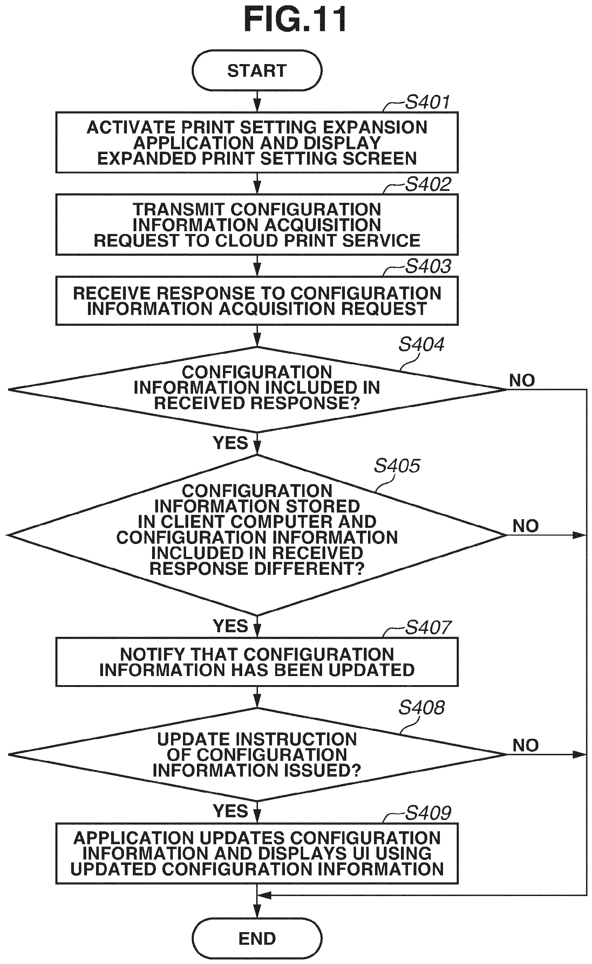

Next, the processing illustrated in steps S704 to S708 of Fig. 7 will be described in detail with reference to Fig. 11.

The processing illustrated in the flowchart of Fig. 11 is implemented by the CPU 101 executing a program stored in the main storage device 102 or the auxiliary storage device 105 of the client computer 100.

The processing is started in accordance with the advanced setting button 1306 on the print setting screen 1300 being selected by the user.

In step S401, the OS 1053 activates the print setting expansion application 300. The activated print setting expansion application 300 displays the expanded print setting screen illustrated in Fig. 10A, based on configuration information stored in the client computer 100.

In step S402, the print setting expansion application 300 instructs the OS 1053 to transmit a configuration information acquisition request. Based on the instruction from the print setting expansion application 300, the OS 1053 transmits a configuration information acquisition request to the cloud print service 500. At this time, the OS 1053 transmits information regarding a print queue to the cloud print service 500. The information regarding a print queue is a name of a print queue, identification information of a printer associated with the print queue, and identification information of a login user, for example. The cloud print service 500 identifies a print queue using the received information such as identification information of a printer, and identifies configuration information associated with the print queue.

In step S403, the print setting expansion application 300 receives a response to the configuration information acquisition request from the OS 1053. Then, in step S404, the print setting expansion application 300 determines whether configuration information is included in the response received from the OS 1053. In a case where configuration information is not included in the response (NO in step S404), the print setting expansion application 300 ends the processing illustrated in Fig. 11. A case where configuration information cannot be acquired due to a communication error is an example of a case where configuration information is not included in the response.

In a case where configuration information is included in the response (YES in step S404), the processing proceeds to step S405. In step S405, the print setting expansion application 300 determines whether configuration information stored in the client computer 100, and the acquired configuration information are different. In a case where the above-described two pieces of configuration information are the same (NO in step S405), because configuration information need not be updated, the print setting expansion application 300 ends the processing illustrated in Fig. 11.

In a case where it is determined that the above-described two pieces of configuration information are different (YES in step S405), the processing proceeds to step S407. In step S407, the print setting expansion application 300 notifies the user that configuration information has been updated. Then, the print setting expansion application 300 inquires of the user whether to update configuration information. In step S407, the print setting expansion application 300 displays the screen illustrated in Fig. 10B.

In step S408, the print setting expansion application 300 determines whether an update instruction of configuration information has been issued. In a case where an update instruction has not been issued (NO in step S408), the print setting expansion application 300 ends the processing illustrated in Fig. 11.

In a case where an update instruction has been issued (YES in step S408), the processing proceeds to step S409. In step S409, the print setting expansion application 300 updates configuration information stored in the client computer 100 in association with a print queue, with the configuration information included in the response received in step S403. Then, in step S409, the print setting expansion application 300 displays an expanded print setting screen that is based on the updated configuration information as illustrated in Fig. 10C.

In the first exemplary embodiment, the print setting expansion application 300 automatically starts processing of acquiring configuration information from the cloud print service 500, at the time of activation. As illustrated in Fig. 10A, the configuration information acquisition button 1700 may be displayed on a screen displayed by the print setting expansion application 300, and the print setting expansion application 300 may start the processing in step S402 of Fig. 11 when the user selects the configuration information acquisition button 1700. In this manner, the configuration information acquisition button 1700 may operate as an object for receiving configuration information acquisition instruction from the user.

In the first exemplary embodiment, in step S401 of Fig. 11, after the expanded print setting screen illustrated in Fig. 10A is once displayed, configuration information is acquired from the cloud print service 500. After the print setting expansion application 300 is activated, the processing in step S402 may be performed without displaying the expanded print setting screen illustrated in Fig. 10A.

In the first exemplary embodiment, in a case where configuration information stored in the client computer 100, and configuration information acquired from the cloud print service 500 are different, the configuration information stored in the client computer 100 is updated based on an update instruction from the user. The configuration information stored in the client computer 100 may be updated without receiving an update instruction from the user.

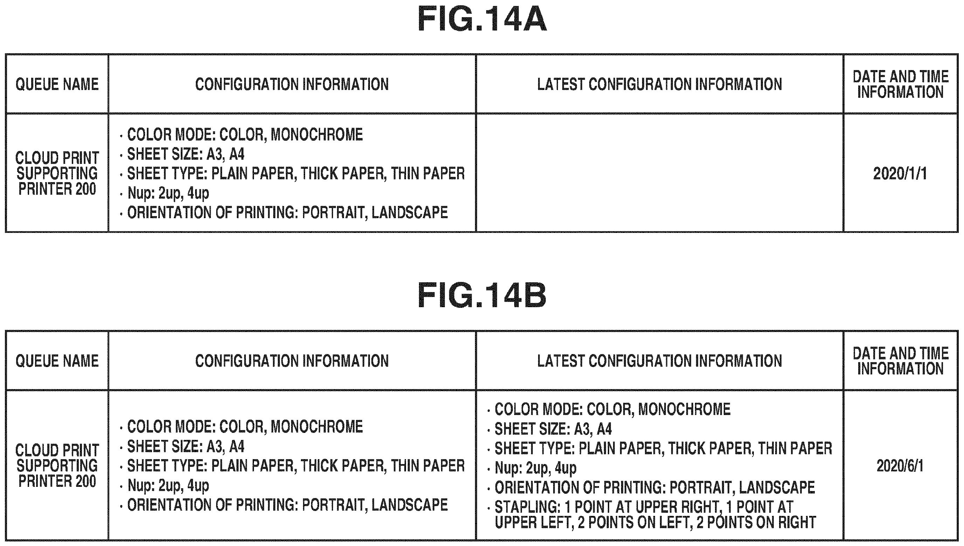

In the first exemplary embodiment, the description has been given assuming that the cloud print service 500 stores information regarding a print queue as illustrated in Fig. 8A or 8B, and updates configuration information acquired when information regarding a printer is registered. The cloud print service 500 may manage information regarding a print queue as illustrated in Fig. 14A or 14B. Fig. 14A illustrates information regarding a print queue that is generated by the cloud print service 500 in step S1603 of Fig. 6. A table illustrated in Fig. 14A is a table substituting for the table illustrated in Fig. 8A, and a column of "latest configuration information" is added. Because configuration information is not updated at a timing at which printer information is registered into the cloud print service 500, "latest configuration information" is blank. In step S1609 of Fig. 6, the client computer 100 is notified of the configuration information illustrated in "configuration information" in Fig. 14A, as information regarding a print queue.

A table illustrated in Fig. 14B is a table indicating configuration information after information regarding a print queue is updated in step S702 of Fig. 7. The configuration information acquired in step S701 of Fig. 7 is stored in "latest configuration information" in Fig. 14B. In step S706 of Fig. 7, the client computer 100 is notified of the configuration information illustrated in "latest configuration information" in Fig. 14B. The print setting expansion application 300 of the client computer 100 updates the stored configuration information acquired in step S1609 of Fig. 6, with the latest configuration information acquired in step S702 of Fig. 7. With this configuration, configuration information can be updated while the cloud print service 500 storing configuration information acquired when printer information is registered.

In the first exemplary embodiment, the print setting expansion application 300 acquires configuration information stored in the cloud print service 500, and compares the acquired configuration information and configuration information stored in the client computer 100. In a second exemplary embodiment, it is determined whether to update configuration information stored in the client computer 100, based on date and time information indicating date and time on which configuration information is stored into the cloud print service 500, and date and time information indicating date and time on which the client computer 100 stores configuration information.

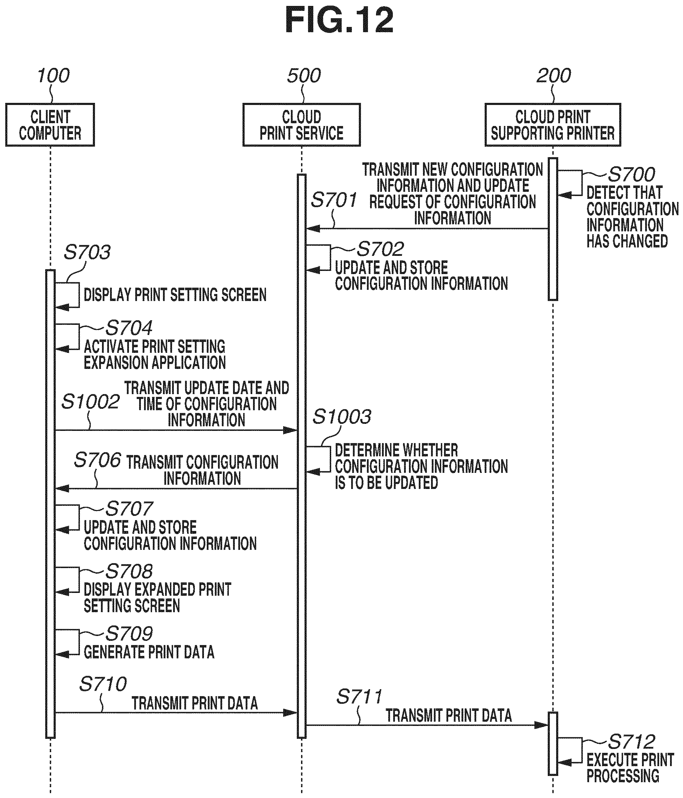

Fig. 12 is a sequence diagram illustrating processing according to the second exemplary embodiment. The processing illustrated in Fig. 12 is processing substituting for the processing illustrated in Fig. 7 in the first exemplary embodiment. The same step numbers are allocated to the same steps as in the first exemplary embodiment, and differences from the first exemplary embodiment will be described.

In step S1002, the print setting expansion application 300 of the client computer 100 transmits date and time information indicating date and time on which configuration information stored in the client computer 100 is stored, to the cloud print service 500.

In step S1003, referring to information regarding a print queue, the cloud print service 500 compares update date and time of configuration information that has been transmitted from the client computer 100, and update date and time of configuration information stored in the cloud print service 500. Then, the cloud print service 500 determines whether the configuration information stored in the client computer 100 is to be updated. For example, in a case where the update date and time of the configuration information stored in the cloud print service 500 are more recent than the update date and time transmitted from the client computer 100, the cloud print service 500 determines that the configuration information is to be updated.

In a case where the cloud print service 500 determines that the configuration information in the client computer 100 is to be updated, the processing in step S706 and subsequent steps is executed.

In a case where it is determined in the determination in step S1003 that the date and time information stored in the cloud print service 500 and the date and time information transmitted from the client computer 100 are equal, the cloud print service 500 determines that the configuration information need not be updated. In a case where it is determined that the configuration information need not be updated, the cloud print service 500 notifies the client computer 100 that the configuration information need not be updated. In this case, the processing in steps S706 and S707 is not executed, and the processing in step S708 and subsequent steps is executed.

In Fig. 12, the processing illustrated in step S1002 is triggered at a timing at which the print setting expansion application 300 displays the expanded print setting screen. The trigger timing is not limited to the above-described timing as long as the timing is a timing at which the print setting expansion application 300 is activated, and the processing illustrated in steps S 1002, S 1003, S706, and S707 may be performed.

With this configuration, it can be determined whether configuration information stored in the client computer 100 needs to be updated, without the client computer 100 acquiring configuration information from the cloud print service 500.

In the first and second exemplary embodiments, if a change in configuration of the printer 200 is detected, configuration information stored in the cloud print service 500 is changed. In a third exemplary embodiment, in accordance with an instruction from the print setting expansion application 300 of the client computer 100, the cloud print service 500 inquires of the printer 200 about configuration information, and update processing of configuration information is performed.

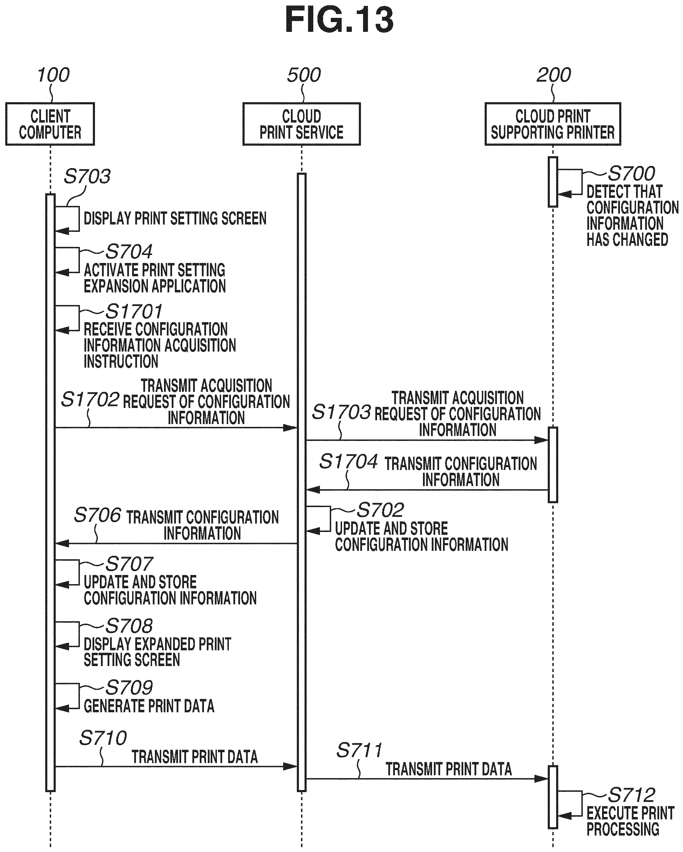

Fig. 13 is a sequence diagram illustrating processing according to the third exemplary embodiment. In Fig. 13, the same step numbers as in the first exemplary embodiment are allocated to the same steps as in the first exemplary embodiment, and differences from the first exemplary embodiment will be described.

If an activation instruction of the print setting expansion application 300 is issued in step S704, the expanded print setting screen illustrated in Fig. 10A is displayed.

In step S1701, the print setting expansion application 300 of the client computer 100 receives a configuration information acquisition instruction from the user. The print setting expansion application 300 receives the configuration information acquisition instruction in accordance with the configuration information acquisition button 1700 being selected on the expanded print setting screen illustrated in Fig. 10A.

In step S1702, the print setting expansion application 300 of the client computer 100 transmits an acquisition request of configuration information to the cloud print service 500.

In step S1703, the cloud print service 500 transmits an acquisition request of configuration information to the printer 200 based on the received acquisition request of configuration information.

In step S1704, the printer 200 transmits configuration information updated in step S700, to the cloud print service 500.

In step S702, the cloud print service 500 stores information regarding a printer queue of the printer 200 and the acquired configuration information in association with each other.

After that, the processing illustrated in steps S706 to S712 is executed.

In this manner, in the third exemplary embodiment, configuration information is acquired in accordance with an instruction from the client computer 100. With this configuration, even if configuration information stored in the cloud print service 500 is not updated, configuration information referred to by the print setting expansion application 300 can be updated.

### <Other Exemplary Embodiments>

In the above-described exemplary embodiments, the description has been given of an example case where a function is added as the update of configuration information. Cases where configuration information is updated also include a case where a finisher is detached from the printer 200, aside from a case where a finisher is attached to the printer 200 and configuration information is added. Also in this case, processing similar to the above-described exemplary embodiments is executed.

In the above-described exemplary embodiments, the print setting expansion application 300 displays an expanded print setting screen using updated configuration information. The application 1051, the OS 1053, and the cloud print driver 1052 may use updated configuration information when displaying the print setting screen illustrated in Fig. 9. For example, in a case where stapling can be set on the print setting screen illustrated in Fig. 9, if configuration information corresponding to a print queue includes a setting of stapling, a print setting screen on which stapling can be set is displayed. On the other hand, in a case where configuration information corresponding to a print queue does not include a setting of stapling, the application 1051, the OS 1053, and the cloud print driver 1052 display a print setting screen on which stapling cannot be set.

Referring to Fig. 7, the description has been given of an example in which the cloud print supporting printer 200 notifies the cloud print service 500 of a change in configuration information, and the client computer 100 acquires configuration information from the cloud print service 500 at a timing at which the print setting expansion application 300 is activated. In addition, referring to Fig. 13, the description has been given of an example in which the cloud print service 500 acquires configuration information from the cloud print supporting printer 200 based on an instruction received from the client computer 100. Aside from the above-described examples, after the sequence illustrated in Fig. 6 is executed, the cloud print service 500 may transmit an acquisition request of configuration information to the cloud print supporting printer 200 at a predetermined timing. Then, when the print setting expansion application 300 is activated, the client computer 100 may access the cloud print service 500 and acquire configuration information stored in the cloud print service 500.

An exemplary embodiments of the present disclosure is also implemented by executing the following processing. More specifically, the processing is processing of supplying software (program) for executing functions of the above-described exemplary embodiment, to a system or an apparatus via a network or various storage media, and a computer (or CPU, micro processing unit (MPU), or the like) of the system or the apparatus reading out and executing a program code. In this case, the computer program and a storage medium storing the computer program are included in the present disclosure.

Embodiments) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiments) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure includes exemplary embodiments, it is to be understood that the disclosure is not limited to the disclosed exemplary embodiments. The scope of the following claims is to be accorded the broadest interpretation so as to encompass all such modifications and equivalent structures and functions.

An information processing apparatus described in this specification includes an acquisition unit configured to acquire configuration information of a printing apparatus from a cloud print server system, a storage unit configured to store the acquired configuration information, a control unit configured to display a print setting screen on a display unit based on configuration information stored in the storage unit, a transmission unit configured to transmit an acquisition request of configuration information in a state in which configuration information is stored in the storage unit, and an update unit configured to update the configuration information stored in the storage unit, using configuration information acquired based on the transmitted acquisition request.

## Claims

1. An information processing apparatus comprising:
acquisition means for acquiring, from a server system, at least identification information of a printing apparatus and configuration information of the printing apparatus;
storage means for storing the acquired configuration information;
installation means for installing an application for displaying a print setting screen on display means based on the identification information stored in the storage means;
transmission means for transmitting an acquisition request of configuration information to the server system based on an instruction from the installed application; and
control means for storing, into the storage means, configuration information acquired based on the acquisition request transmitted by the transmission means.

2. The information processing apparatus according to claim 1, wherein the application displays the print setting screen based on the configuration information acquired based on the acquisition request.

3. The information processing apparatus according to claim 1 or 2, wherein the application displays an object for receiving a user instruction for issuing an acquisition request of configuration information of the printing apparatus.

4. The information processing apparatus according to any one of claims 1 to 3,
wherein the printing apparatus transmits, to the server system, a registration request for registering information regarding the printing apparatus into the server system based on an operation performed by a user, and
wherein the server system stores the identification information and the configuration information based on the registration request.

5. The information processing apparatus according to any one of claims 1 to 4, wherein the configuration information is information changing based on a hardware configuration connected to the printing apparatus.

6. The information processing apparatus according to any one of claims 1 to 5, wherein the configuration information acquired based on the acquisition request is configuration information transmitted by the printing apparatus to the server system by detecting that the hardware configuration is changed.

7. The information processing apparatus according to any one of claims 1 to 6, wherein the transmission means transmits the acquisition request in accordance with a display instruction of the print setting screen being issued.

8. An application displaying a print setting screen regarding print data to be transmitted to a server system, on an information processing apparatus,
wherein the application displays the print setting screen on the information processing apparatus that transmits the print data to the server system, based on configuration information of a printing apparatus that has been acquired from the server system, and
wherein the application transmits to the server system an acquisition request of configuration information of the printing apparatus in a state in which the information processing apparatus stores the configuration information.

9. The application according to claim 8, wherein the application can display the print setting screen based on configuration information acquired in accordance with the acquisition request.

10. The application according to claim 8 or 9,
wherein the printing apparatus transmits, to the server system, a registration request for registering information regarding the printing apparatus into the server system based on an operation performed by a user, and
wherein the server system stores the configuration information based on the registration request.

11. The application according to any one of claims 8 to 10, wherein the configuration information is information that is based on hardware connected to the printing apparatus.

12. The application according to any one of claims 8 to 11, wherein the application is installed onto the information processing apparatus based on identification information of the printing apparatus that has been acquired by the information processing apparatus from the server system.

13. A control method of an information processing apparatus that is to be executed by executing an application installed based on identification information of a printing apparatus that is acquired from a server system, the control method comprising:
acquiring configuration information of the printing apparatus from the server system;
displaying a print setting screen based on configuration information acquired from the server system; and
receiving a user operation of setting a setting value, via the print setting screen.

14. The control method according to claim 13, wherein the information processing apparatus is caused to acquire the configuration information from the server system in accordance with the application being activated.

15. The control method according to claim 13 or 14, further comprising acquiring configuration information of the printing apparatus from the server system before the application is installed.

16. The control method according to any one of claims 13 to 15, further comprising transmitting print data including a setting value set via the print setting screen to the server system.

17. The control method according to any one of claims 13 to 16, wherein the server system is a server system that registers the identification information of the printing apparatus in accordance with a request from the printing apparatus.
